# DEMANDE DE BREVET EUROPEEN

(11) **EP 1 637 402 A1**
(43) Date de publication de la demande: **22.03.2006**
(21) Numéro de dépôt: 05300706.8
(22) Date de dépôt: 31.08.2005
(51) Int. Cl.: B60R 13/08

(54) **Plancher de véhicule comprenant un bas de tablier**

(30) Priorité: 15.09.2004 FR 0409759
(71) Demandeur: Renault s.a.s., 92100 Boulogne Billancourt (FR)
(72) Inventeur: Bouillon, Jean-Charles, 78340, Les Clayes sous Bois (FR)

(57) **Abrégé**

La présente invention propose un plancher de véhicule comprenant un bas de tablier (100), caractérisé en ce qu'un coussinet d'air (104) est prévu en partie supérieure arrière du bas de tablier (100).

## Description

La présente invention concerne des structures de plancher de véhicules, notamment automobiles.

On connaît déjà des planchers de ce type qui comportent trois éléments distincts : une moquette, un bas de tablier et un sous-tapis avant.

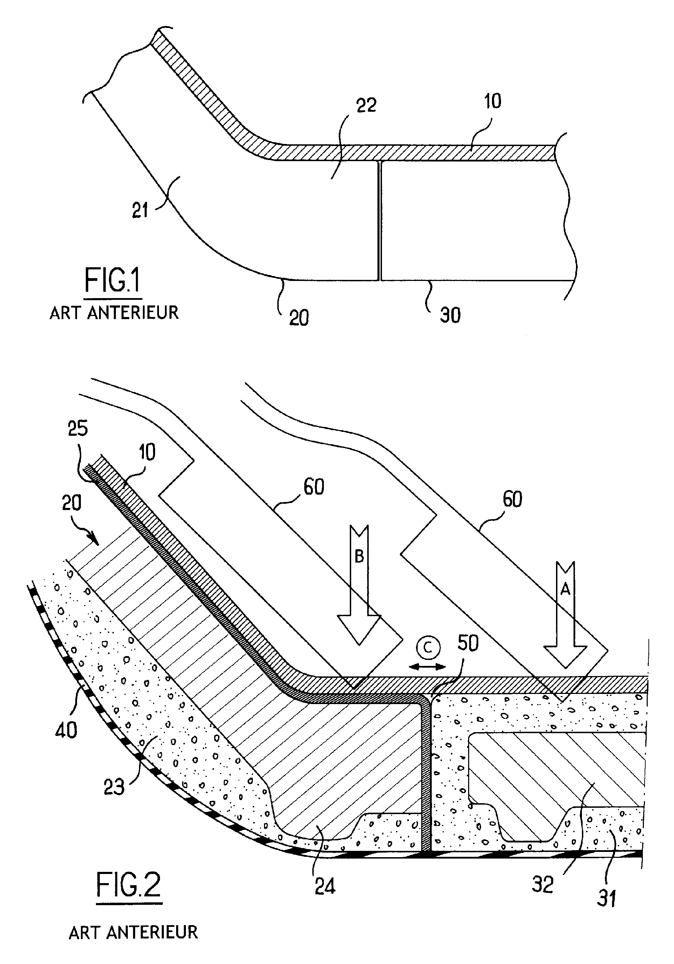

Comme l'illustre la figure 1, qui représente une vue en coupe transversale d'une structure de plancher, la moquette 10 visible de l'intérieur de l'habitacle du véhicule repose sur le sous-tapis avant 30 et le bas de tablier 20.

En partant de l'avant vers l'arrière du véhicule, ce dernier possède une première partie 21 dont la surface est inclinée pour permettre à une personne de poser ses pieds selon un angle caractéristique d'une position de confort ergonomique.

Le bas de tablier possède en outre une autre partie 22 dont la surface est horizontale et censée notamment constituer un lien avec le sous-tapis avant 30 ayant, lui aussi, une surface horizontale.

La figure 2 montre schématiquement et plus en détails une structure, vue en coupe, de ce plancher de l'art antérieur.

Le bas de tablier 20 comporte ici une masse lourde 25 située directement sous une partie de la moquette 10 et reposant sur une cale repose pied 24 beaucoup plus volumineuse et réalisée avec un matériau du type semi-rigide.

On notera ici qu'une fonction de la masse lourde 25 est d'isoler acoustiquement l'habitacle notamment des bruits du moteur, tandis que le matériau semi-rigide, de faible densité, joue essentiellement un rôle en termes de sécurité.

Finalement, une mousse 23, typiquement en polyuréthane, vient remplir l'espace encore libre entre la cale repose pied 24 et la tôle inférieure 40 du véhicule.

Pour ce qui concerne maintenant le sous-tapis avant 30, il comporte une mousse 31 en polyuréthane et située directement sous le tapis.

Cette mousse 31 qui repose sur la tôle inférieure 40 entoure une cale 32, en polystyrène expansé, dont une fonction est de pouvoir résister au poids d'une personne lorsqu'elle entre ou sort de l'habitacle.

Ainsi, une telle cale 32 possède généralement une forte densité en direction verticale.

Sur la figure 2, on a également représenté, d'une part deux positions possibles d'une pédale 60 du véhicule (par exemple une pédale d'embrayage) selon qu'elle est enfoncée ou non, et d'autre part trois zones de confort A, B et C.

La zone de confort A, à l'arrière du sous-tapis avant 30, correspond à une zone de confort moelleux tandis que la zone B, qui se situe à l'avant de du bas de tablier 20, correspond à une zone de confort non moelleux que l'on désignera par zone de confort ferme.

La zone C se situe entre la zone A et B et correspond à une zone de confort très moelleux.

Plus précisément la zone C se situe à la jonction entre le bas de tablier 20 et le sous-tapis avant 30.

Cette zone est très moelleuse, car ladite jonction possède notamment un profil sensiblement abrupt entre le bas de tablier et le sous-tapis avant qui laisse place à un léger vide 50 sous la moquette 10.

Par ailleurs, comme on a pu le voir précédemment, le confort en arrière et en avant de cette jonction est très différent.

On passe en effet d'un confort moelleux en zone A à un confort ferme en zone B, ce qui accentue la sensation de différence de confort autour de la jonction et plus particulièrement dans la zone C.

On notera ici que cette dernière s'étend selon l'axe longitudinal du véhicule sur une distance non négligeable.

En l'occurrence cette distance peut parfois atteindre quelques dizaines de centimètres.

Ainsi un problème de ce type de structure de plancher est que le profil de transition de confort entre les zones A et B n'étant pas régulier, la personne (conducteur ou passager avant) perçoit sous ses pieds un confort très différent selon qu'ils reposent en zone A, B ou C.

Un autre problème lié à une telle irrégularité de profil, concerne les phénomènes d'usure précoce.

C'est en particulier le cas pour ce qui concerne la moquette 10 au niveau de la zone C.

Une accumulation de passages des pieds de la personne sur la surface de la zone C qui comporte des différences de profil, donc des accrocs, entraîne inexorablement une usure de la moquette 10.

Une telle usure pose des problèmes non seulement de longévité des matériaux, mais aussi d'agrément visuel.

On notera que ladite accumulation de passages des pieds peut venir de différents types de situations.

Un premier type de situation est celui où le passager avant écrase de son pied la zone C lorsqu'il entre ou sort de l'habitacle.

En cet endroit, la moquette est extrêmement sollicitée notamment par les talons des chaussures.

Un deuxième type de situation est celui où ce passager, assis confortablement, bouge simplement ses pieds qui passent par la zone C.

En particulier, la détérioration est plus importante lors d'un mouvement suivant la direction de marche du véhicule que dans le sens transversal.

Un troisième type de situation est celui où le conducteur sollicite longitudinalement la pédale 60.

Dans ce cas, cette dernière se déplace de la zone A vers la zone B en passant par la zone C.

Et, si simultanément le pied frotte la surface de moquette 10, une dégradation importante de celle-ci a lieu spécifiquement dans la zone C.

Un quatrième type de situation est celui où le pied qui sollicite la pédale 60 d'accélérateur est d'une taille telle qu'en position naturelle sur cette pédale 60 le talon prend appui dans la zone C.

Outre des problèmes de dégradation pouvant conduire un perçage de la moquette, une telle situation dégrade le confort ressenti par le conducteur au niveau de son pied.

Un but de l'invention est d'améliorer la structure du plancher, par exemple pour résoudre au moins l'un des problèmes ci-dessus.

Afin d'atteindre ce but, elle propose un plancher de véhicule dont le profil de transition dans la zone C est amélioré.

A cet effet, on prévoit selon l'invention un plancher de véhicule comprenant un bas de tablier, caractérisé en ce qu'un coussinet d'air est prévu en partie supérieure arrière du bas de tablier.

Certains aspects préférés, mais non limitatifs, de ce plancher sont les suivants :
- le coussinet d'air est formé entre deux matériaux prévus dans le bas de tablier,
- le coussinet comprend un sous-tapis avant et, en coupe transversale du plancher, il s'étend du bas de tablier vers le sous-tapis avant en s'épaississant,
- le coussinet d'air s'étend suivant une largeur du véhicule,
- le sous-tapis avant comporte deux matériaux, dont l'un se trouve comprimé en partie avant du sous-tapis,
- le matériau comprimé est comprimé suivant la direction de marche du véhicule,
- le matériau comprimé est en contact avec une moquette du plancher et avec le bas de tablier.

Par ailleurs la présente invention propose un procédé pour fabriquer un plancher de véhicule comportant un bas de tablier, caractérisé en ce qu'on réalise un coussinet d'air dans le bas de tablier.

Certains aspects préférés, mais non limitatifs, de ce procédé sont les suivants :
- on réalise le coussinet d'air en agençant deux matériaux constituant le bas de tablier de sorte qu'un espace d'air isolé soit formé entre eux,
- préalablement à l'agencement des deux matériaux, on pose, puis on plaque l'un d'eux sur une matrice,
- le procédé comporte en outre une injection d'un troisième matériau du bas de tablier dans la matrice fermée par un poinçon, ladite injection étant mise en oeuvre via au moins un orifice traversant un centre du poinçon.

Ainsi, selon l'invention, on améliore le profil de transition de confort entre la zone A et B en prévoyant un coussinet d'air pour assouplir l'avant de la zone C de confort trop ferme.

On améliore en outre ce profil de transition en raffermissant le confort trop moelleux à l'arrière de la zone C au moyen d'un matériau comprimé.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la figure 1 montre schématiquement une vue en coupe transversale d'une structure de plancher typique de l'art antérieur,
- la figure 2 donne une représentation schématique plus détaillée qu'à la figure 1 d'une vue en coupe transversale d'une structure de plancher typique de l'art antérieur,
- la figure 3 représente une vue en coupe transversale d'un plancher réalisé selon un mode préféré de l'invention,
- la figure 4 illustre en coupe transversale les moyens utilisés pour réaliser selon un mode préféré de l'invention le plancher de l'invention,
- la figure 5 illustre au moyen de courbes une comparaison du confort du plancher de l'art antérieur et de la présente invention.

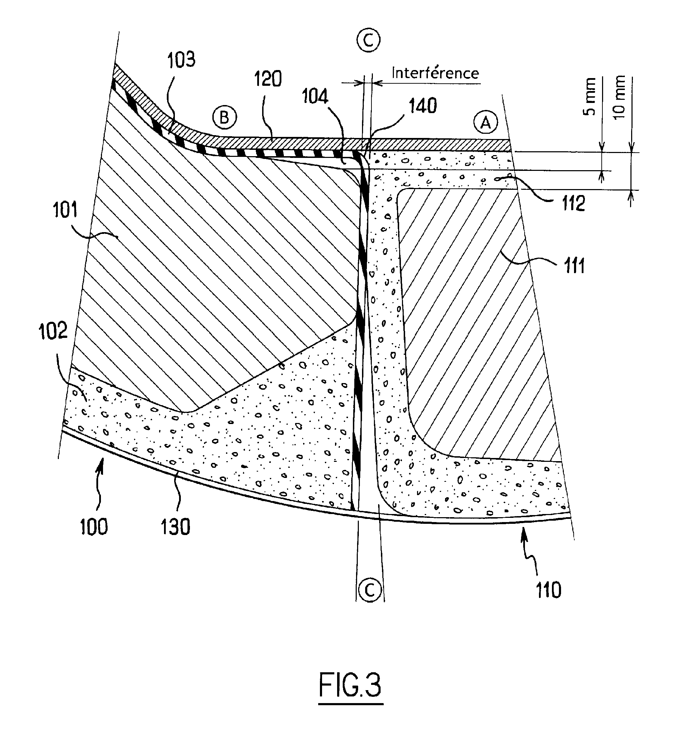

En se référant maintenant à la figure 3, un plancher selon un mode de réalisation préférée de l'invention comporte un bas de tablier 100 à l'avant du plancher, un sous-tapis avant 110 à l'arrière du plancher et une moquette 120 recouvrante visible de l'habitacle.

Une face arrière du bas de tablier 100 est en contact avec une face avant du sous-tapis avant 110.

Ils reposent tous deux sur une tôle inférieure avant 130 du véhicule.

Plus précisément, dans ce mode de réalisation, le sous-tapis avant 100 et le bas de tablier 110 comportent respectivement deux et trois matériaux distincts.

Le sous-tapis avant 100 comprend en effet une cale repose pied 101 - typiquement un matériau semi-rigide comme du polyuréthane - entourée dans sa partie basse par une mousse polyuréthane acoustique 102 de faible densité et dans sa partie supérieure et latérale arrière par une masse lourde 103.

La partie avant de la masse lourde 103 ainsi que de la cale repose pied 101 possèdent une forme supérieure inclinée vers le haut lorsqu'elles s'étendent vers l'avant du véhicule.

Par ailleurs, la partie arrière de ces deux éléments possède une forme sensiblement horizontale, cette partie correspondant à une zone d'accueil A, notée sur la figure 3, c'est-à-dire à une zone qui est sollicitée par des pieds lors d'une montée dans le véhicule ou inversement lors d'une descente.

Plus précisément encore, on peut observer en partie arrière de la cale repose pied 101 un léger décrochement vers le bas du profil horizontal.

Ce décrochement, fabriqué à partir d'un biseautage de la partie supérieure arrière du bas de tablier 100 permet de laisser un espace d'air de forme désirée formant coussinet d'air 104 entre une face inférieure de la masse lourde 103 et une face supérieure de la cale repose pied 101.

Ce biseautage est mis en oeuvre de telle façon que, vu en coupe suivant la direction de marche du véhicule qui est ici la direction longitudinale, le plancher comporte un coussinet d'air 104 qui s'étend du bas de tablier 100 vers le sous-tapis avant 110 en s'épaississant.

Ainsi, selon la direction longitudinale du véhicule, le coussinet 104 prend forme à l'avant de la zone dont le profil doit être modifié et termine, avec une plus grande épaisseur et en angle droit, sous la masse lourde 103 sensiblement au centre de cette zone, à savoir à l'extrémité supérieure arrière du bas de tablier 100.

On notera que l'on a avantageusement arrondi le profil en angle droit du coussinet 104 pour adoucir ses formes.

Toutefois, dans le mode préféré de réalisation de l'invention, un tel arrondi n'est mis en forme que lorsque l'épaisseur du coussinet d'air 104 atteint environ la moitié de l'épaisseur d'une mousse 112 dont nous présenterons ci-dessous au moment de la description du sous-tapis 110.

Par ailleurs, le coussinet d'air 104 s'étend sur une largeur du véhicule.

Par exemple, il s'étend suivant la largeur du plancher réservé au conducteur et/ou du plancher réservé au passager avant.

Concernant maintenant le sous-tapis avant 110 et selon cette forme de réalisation de l'invention, il comporte une cale de portance 111 typiquement en polystyrène expansé entourée d'une mousse acoustique 112 typiquement en polyuréthane.

Selon la présente invention, une épaisseur typique de la mousse acoustique 112 est de 10mm.

En conséquence, comme mentionné plus haut, ledit arrondi du coussinet d'air 104 ne prend forme que lorsque son épaisseur atteint environ 5mm.

Une partie supérieure de la face avant de la mousse 112 est en contact avec une partie supérieure de la face latérale de la masse lourde 103.

Plus précisément cette partie de la mousse 112 est comprimée dans la direction longitudinale du véhicule et prend appui sur ladite face arrière de la masse lourde 103.

Cet état de compression longitudinale est obtenu en créant une interférence au nominal entre ces deux matériaux 103 et 112.

Une interférence (ou un taux de compression) préférée par la demanderesse est de l'ordre d'une trentaine de pourcents.

Compte tenu que l'épaisseur générale de la mousse acoustique 112 est de l'ordre de 10mm, une telle interférence est égale à 3mm environ.

Dans ce cas, on notera sur la figure 3, que le vide 140 possède une dimension plus réduite que celle de l'art antérieur (référence 50 sur la figure 2), ce qui offre comme nous le verrons un avantage additionnel quant à une bonne régularité du profil de transition de confort dans cette zone.

Préalablement à la description du comportement d'un tel plancher, nous décrivons ci-dessous un procédé permettant de fabriquer celui-ci, et plus particulièrement l'ensemble du bas de tablier 100 de l'invention.

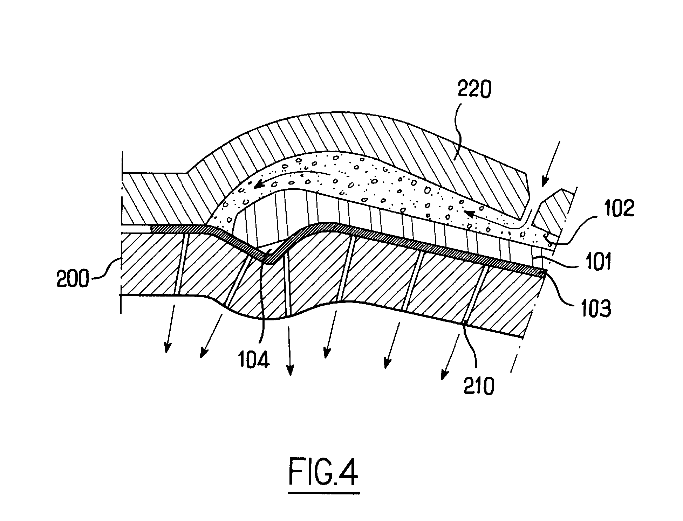

Afin de former un coussinet d'air 104 dans le bas de tablier 100 du plancher, la présente invention propose notamment d'utiliser une matrice 200 comme représentée schématiquement à la figure 4.

On notera ici que cette figure représente une vue en coupe notamment des matériaux du bas de tablier 100 telles qu'observables lors de sa fabrication et non une fois assemblées dans le véhicule.

Ainsi, par rapport à la figure 3, le bas de tablier 100 est représenté en ayant effectué une rotation d'environ 135 degrés trigonométriques autour d'un axe de symétrie orthogonal à cette figure.

La matrice 200 possède en surface une forme correspondante au profil désiré de la masse lourde 103 du bas de tablier 100.

Pour conformer de manière précise cette masse lourde 103 au bas de tablier 100, celle-ci est tout d'abord chauffée puis déposée en feuilles sur la matrice 200.

Elle est ensuite plaquée contre la surface supérieure de la matrice 200 au moyen d'une aspiration au travers de cette dernière.

A cet effet, des orifices traversants 210 sont prévus le long de la matrice 200.

La cale repose pied 101 est ensuite positionnée sur la masse lourde 103.

Comme la cale 101 a été judicieusement biseautée suivant une forme désirée, l'assemblage avec la masse lourde 103 laisse l'espace d'air prévu formant le coussinet d'air 104.

On enferme ensuite la masse lourde 103, la cale repose pied 101 et le coussinet d'air ainsi formé au moyen d'un poinçon 220 en prévoyant un nouvel espace libre entre la surface inférieure du poinçon 220 et la surface supérieure de la cale repose pied 101.

Ce nouvel espace libre possède la forme de la mousse acoustique 102 que l'on souhaite réaliser dans le bas de tablier 100.

A cet égard, une telle réalisation est mise en oeuvre en injectant dans l'espace libre prévu le matériau 102 correspondant (typiquement le polyuréthane déjà mentionné).

Cette injection est rendue possible grâce à un orifice traversant 221 disposé sensiblement au centre du poinçon 220.

La mousse 102 ainsi injectée remplit tout l'espace libre prévu à cet effet et cela termine alors la réalisation d'un tel bas de tablier 100.

On notera par ailleurs que, durant cette étape d'injection, aucune infiltration de mousse 102 n'a lieu dans le coussinet d'air 104, le plaquage préalable de la cale porteuse 101 contre la masse lourde 103 permettant d'obtenir une parfaite étanchéité.

On va maintenant décrire le comportement du plancher de la présente invention.

Comme représenté sur la figure 3, un tel plancher comporte toujours trois zones A, B et C, chacune d'elles correspondant à un confort particulier ou plus généralement possédant des propriétés de déformation particulières.

En particulier, les zones A et B sont comme dans l'art antérieur, de confort moelleux et ferme respectivement.

En revanche la zone C correspondant à la jonction entre la bas de tablier et le sous-tapis avant 110 possède ici un confort nettement amélioré par rapport à celui de l'art antérieur.

Premièrement, l'interférence au nominal prévue permet de réduire l'étendue et la profondeur du vide 140 sous la moquette, ce qui améliore le confort du centre de la zone C.

Cette interférence permet par ailleurs d'augmenter la densité locale de la mousse 112 à l'arrière de la zone C, puisque celle-ci s'y trouve comprimée.

Il en résulte une légère modification du type de confort lorsque l'on passe de la zone A à l'arrière de la zone C.

On passe maintenant d'un confort moelleux à moins moelleux sans être encore aussi ferme que dans la zone B.

Deuxièmement, la forme biseautée de la cale repose pied 101 du bas de tablier permet avantageusement de réduire un phénomène de « cran » lors d'un passage de talon de l'arrière vers l'avant de la zone ou inversement.

De plus, comme décrit plus haut, cette forme biseautée permet également de former le coussinet d'air 104 qui continue à effacer le phénomène mentionné.

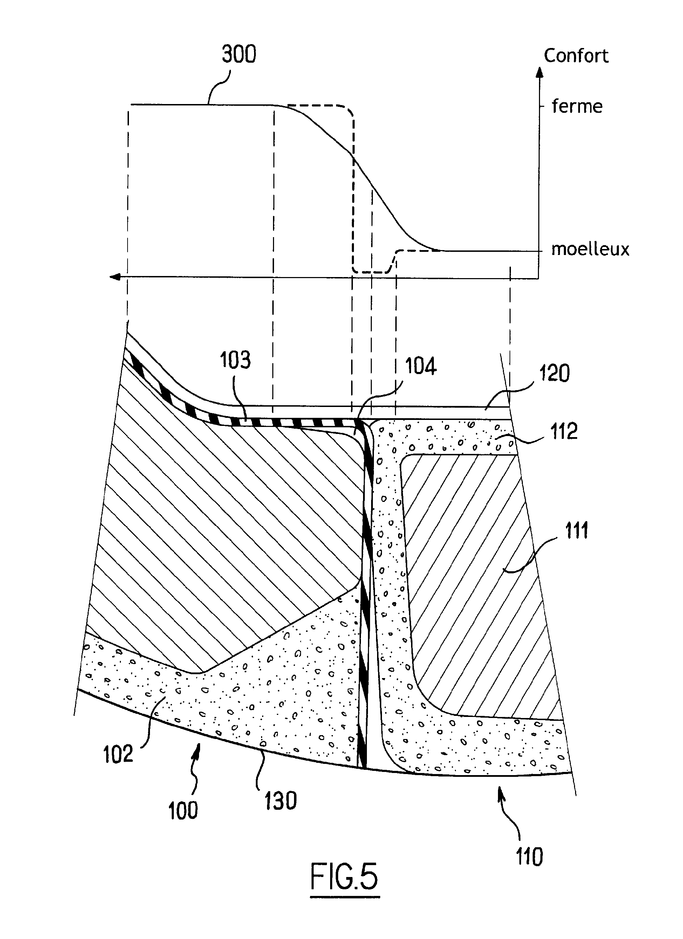

Afin d'illustrer les variations de confort d'un tel plancher, on a représenté à la figure 5 une courbe 300 représentative du confort selon la position du pied dans la direction de marche du véhicule.

Sur cette figure, l'axe des abscisses est parallèle à cette dernière direction et pointe vers l'avant du véhicule.

Par ailleurs, figure en pointillés, une illustration du confort ressenti à partir d'un plancher de l'art antérieur.

D'après cette figure, on peut voir que la courbe correspondant à l'invention est sensiblement croissante monotone lorsqu'on passe du sous-tapis avant 110 vers le bas de tablier 100, tandis que la courbe correspondant à l'art antérieur possède des variations de monotonies représentatives de variations de confort importantes et gênantes dans la zone C.

Bien entendu, la présente invention n'est nullement limitée à la forme de réalisation décrite ci-dessus et représentée sur les dessins.

En particulier, on pourra modifier les épaisseurs des matériaux suivant le profil de transition de confort désiré.

Dans ce même but, on envisage par ailleurs d'utiliser des épaisseurs de coussinets différentes et de jouer sur la compression de la mousse acoustique du sous-tapis avant.

L'homme du métier comprendra aussi que le coussinet d'air pourra être remplacé par tout autre moyen disposant de propriétés élastiques telles qu'elles améliorent comme ici le profil de transition de confort entre les zones A et B.

## Revendications

1. Plancher de véhicule comprenant un bas de tablier (100), **caractérisé en ce qu'**un coussinet d'air (104) est prévu en partie supérieure arrière du bas de tablier (100).

2. Plancher selon la revendication 1, **caractérisé en ce que** le coussinet d'air (104) est formé entre deux matériaux prévus dans le bas de tablier (100).

3. Plancher selon l'une des revendications précédentes, **caractérisé en ce qu'**il comprend un sous-tapis avant (110) et **en ce que**, en coupe transversale du plancher, le coussinet d'air (104) s'étend du bas de tablier (100) vers le sous-tapis avant (110) en s'épaississant.

4. Plancher selon l'une des revendications précédentes, **caractérisé en ce que** le coussinet d'air (104) s'étend suivant une largeur du véhicule.

5. Plancher selon l'une des revendications précédentes, **caractérisé en ce que** le sous-tapis (110) avant comporte deux matériaux, dont l'un se trouve comprimé en partie avant du sous-tapis (110).

6. Plancher selon la revendication 5, **caractérisé en ce que** le matériau comprimé est comprimé suivant la direction de marche du véhicule.

7. Plancher selon l'une des revendications 5 à 6, **caractérisé en ce que** le matériau comprimé est en contact avec une moquette (120) du plancher et avec le bas de tablier (100).

8. Véhicule comportant un plancher tel que défini selon l'une quelconque des revendications précédentes.

9. Procédé pour fabriquer un plancher de véhicule comportant un bas de tablier (100), **caractérisé en ce qu'**on réalise un coussinet d'air (104) en partie supérieure arrière du bas de tablier (100).

10. Procédé selon la revendication 9, **caractérisé en ce qu'**on réalise le coussinet d'air (104) en agençant deux matériaux constituant le bas de tablier (100) de sorte qu'un espace d'air (104) isolé soit formé entre eux.

11. Procédé selon l'une des revendications 9 à 10, **caractérisé en ce que** préalablement à l'agencement des deux matériaux, on pose, puis on plaque l'un d'eux sur une matrice (200).

12. Procédé selon l'une des revendications 9 à 11, **caractérisé en ce qu'**il comporte en outre une injection d'un troisième matériau du bas de tablier (100) dans la matrice fermée par un poinçon, ladite injection étant mise en oeuvre via au moins un orifice (221) traversant un centre du poinçon (220).
